# EUROPEAN PATENT APPLICATION

(11) **EP 1 684 162 A2**
(43) Date of publication of application: **26.07.2006**
(21) Application number: 05023707.2
(22) Date of filing: 28.10.2005
(51) Int. Cl.: G06F 3/12

(54) **Print data processor**

(30) Priority: 24.11.2004 JP 2004338709; 24.11.2004 JP 2004338758
(71) Applicant: Dainippon Screen Mfg. Co., Ltd., Kyoto 602-8585 (JP)
(72) Inventor: Inoue, Kazuhiro Dainippon Screen Mfg. Co., Ltd, Horikawa-dori, Kamikyo-ku,Kyoto 602-8585 (JP)
(74) Representative: Kilian, Helmut

(57) **Abstract**

Provided is a print system for generating print data and print job data such that they may be restored from a printed matter. PDL-converted layout data that can be obtained by performing PDL conversion of predetermined layout data is symbolized in a predetermined encoding technique, and image data of the obtained symbol is PDL-converted. The resulting data is combined with the PDL-converted layout data and then supplied to a printer as print data. Printing of this print data results in a printed matter PM, in which a symbol SB is added to a substantive image, i.e., the image of contents desired to represent at the time of layout. By a predetermined restore processor with decode means corresponding to the encoding technique, the symbol SB is read and decoded, thereby faithfully restoring the PDL-converted layout data. Once a document is kept as a printed matter, the reuse of layout data is easy to carry out, without retaining electronic data. Alternatively, print job data composed of layout data having a PDL format and print processing conditions necessary for printing are symbolized in a predetermined encoding technique. Image data of the obtained symbol is PDL-converted and combined with the layout data, thereby obtaining print j ob data. The execution of print processing of the print job data results in a printed matter, in which a symbol is added to a substantive image, i.e., the image of contents desired to represent at the time of layout. By a predetermined restore processor with a decoding technique corresponding to the encoding technique, the symbol SB is read and decoded, thereby faithfully restoring first print job data. Once a document is kept as a printed matter, reprinting based on print job data can be executed easily and reliably, without retaining electronic data.

## Description

### BACKGROUND OF THE INVENTION

### Field of the Invention

The present invention relates to generation of print data and, in particular, generation of data with potential to reuse.

### Description of the Background Art

Retaining, in the state of electronic data, a document (that is not limited to a text, but may contain only image) that has been used for printed matter generation offers advantages in terms of being reusable later. This is being implemented widely in the form of, for example, retaining in a portable storage medium or a computer hard disk or a dedicated database server.

On the other hand, when a document is retained for a long period of time, there are still not a few cases of retaining in the state of a printed matter being printed on a paper medium. It is also spread widely to generate, based on the contents of a document (composed of a text and an image or the like) retained as a printed matter, electronic data representing this document for the purpose of reuse. Typical methods are to read a document with a scanner to obtain image data, and further to use OCR (optical character reader) software etc. to obtain text data.

Moreover, a two-dimensional code can be used to verify genuineness of a variety of printed documents and a variety of duplicated documents. A technique of using this for preventing forgery and unauthorized use is already known, which is disclosed, for example, in Japanese Patent Application Publication Laid-Open No. 2003-323512.

In the case of retaining the above-mentioned electronic data in a portable storage medium, the durability of the media becomes an issue. On the other hand, in the case of retaining it in a computer or a database server on a network, security becomes an issue. In the case of maintaining reusability of electronic data already retained in a medium or the like that has becomes legacy one as a result of technological innovation, environment for reading the medium needs to be ensured, which brings another issue of necessitating cost for that.

Even if electronic data is generated from a printed matter that is a paper medium, only by generating the image data of the printed matter through an image scanner or the like, it is difficult to reuse the texts described in the printed matter as electronic data of text format (text data). In this case, if its print quality is excellent, the use of OCR software makes it relatively easy to obtain the text data, but cannot achieve generation of data in such a format that it will be able to reproduce faithfully the representation contents of the original printed matter when this data is supplied to printing process in a printer.

Further, even if succeeded in generating layout data that enables the layout state of a document to be reproduced exactly and reliably from a printed matter, however, the processing conditions in obtaining this printed matter needs to conform with that in printing the original printed matter, in order to reproduce the original printed matter from the reproduced layout data.

Japanese Patent Application Publication Laid-Open No. 2003-323512 discloses such a technique that information for identifying printed matter is subjected to two-dimensional coding, and this is additionally printed on the printed matter so as to be useful in preventing unauthorized use and tampering of documents. However, this technique is neither aimed at restoring, from a printed matter, data representing its contents, nor generating a two-dimensional code about layout contents of the printed matter.

### SUMMARY OF THE INVENTION

The present invention relates to generation of print layout data and print job data and, in particular, generation of data with potential to reuse.

According to the present invention, a print data processor includes a symbolizing element, a converting element, and a print data generating element. The symbolizing element generates first symbol data by symbolizing processing for encoding predetermined data to be symbolized (hereinafter referred to as symbolization target data). The converting element converts data having a specific description format to data having a description format written in a predetermined page description language. Hereat, the first symbol data is converted to second symbol data by the converting element. The print data generating element generates print data containing data based on the predetermined symbolization target data and the second symbol data. The predetermined symbolization target data is data containing at least data described in the predetermined page description language. The predetermined symbolize processing is processing for encoding the first symbol data in a technique permitting reversible decoding by predetermined restore means.

With this configuration, decoding a symbol formed on a printed matter enables to faithfully restore print data for obtaining the printed matter. This eliminates the necessity for retaining data in electronic data format. Instead, the printed matter may be kept and restored as needed, thereby facilitating reuse of the print data of the printed matter. In other words, backup data of the print data may be kept in the state of a paper medium, and this backup data can be reused as needed. For example, in the case of printing by a digital printer with no printing plate, whose printing steps are relatively simple, keeping its printed matter may be substituted for so-called storing printing plate in the case of printing with plate, whose printing steps are relatively complicated.

Preferably, a print data processor according to the invention is a print data generating device to generate print data that can be supplied to output processing by a predetermined printer. The print data generating device further includes a layout processing element that generates first layout data. The first layout data is converted to second layout data in the converting element. The symbolizing element symbolizes the second layout data as the predetermined symbolization target data. The print data generating element is a combining element that generates the print data by combining the second symbol data with the second layout data.

With this configuration, decoding a symbol formed on a printed matter enables to faithfully restore print layout data for obtaining the printed matter. This eliminates the necessity for retaining data in electronic data format, thereby facilitating reuse of the print layout data of the printed matter.

According to other aspect of the invention, a print data processor is a print job processor that generates print job data supplied to a print generation processing by predetermined processing means. The print job processor further includes a print job generating element that generates print job data in which print target data described in the predetermined page description language is associated with print processing conditions for the print target data. Hereat, the first print job data is obtained by generating first layout data described in the predetermined page description language employed as the print target data. The symbolizing element symbolizes the first print job data as the predetermined symbolization target data. The print job generating element is also the print data generating element, and generates second print job data as the print data. The second print job data contains the first layout data and the second symbol data as the print target data.

With this configuration, backup data of print job data may be kept in the state of a paper medium and, as needed, the backup data may be restored and supplied to print processing. This permits printing under the same conditions as that of the original printed matter, resulting in a printed matter having substantively the same contents as the original printed matter.

Accordingly, an object of the present invention is to provide a print data processor that generates, from a printed matter, print data capable of restoring the printed matter, as well as a print system containing the print data processor.

These and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a diagram showing schematically the structure of a print system containing a print data generating device according to a first preferred embodiment of the invention;
Fig. 2 is a diagram for explaining functions implemented at a control part of the print data generating device of the first preferred embodiment;
Fig. 3 is a diagram showing the flow of processing related to generation, printing, and restoring of print target data implemented in the print system of the first preferred embodiment;
Fig. 4 is a diagram illustrating an image of a printed matter to be obtained by print processing using PDL-converted layout data in the first preferred embodiment; this diagram also illustrating an image of a printed matter to be obtained by output processing using first print job data in a second preferred embodiment;
Fig. 5A is a diagram illustrating a printed matter to be obtained by print processing using print target data in the first preferred embodiment; this diagram also illustrating a printed matter to be obtained by output processing using second print job data in the second preferred embodiment;
Fig. 5B shows in enlarged dimension one of unit symbols in Fig. 5A;
Fig. 6 is a diagram showing schematically the structure of a print system according to the second preferred embodiment of the invention;
Fig. 7 is a diagram showing respective parts implemented by a control part of a print job processor in the second preferred embodiment;
Fig. 8 is a diagram showing the flow of data between the respective parts in the second preferred embodiment;
Fig. 9 is a diagram showing the flow of processing related to generation, printing, and restoring of print job data implemented in the print system of the second preferred embodiment;
Fig. 10 is a diagram showing the flow of data according to a third preferred embodiment; and
Figs. 11 A, 11B, 11C and 11D are diagrams illustrating the forms of other layouts of symbols, respectively.

### DESCRIPTION OF THE PREFERRED EMBODIMENTS

### <1. First Preferred Embodiment>

### <System Configuration>

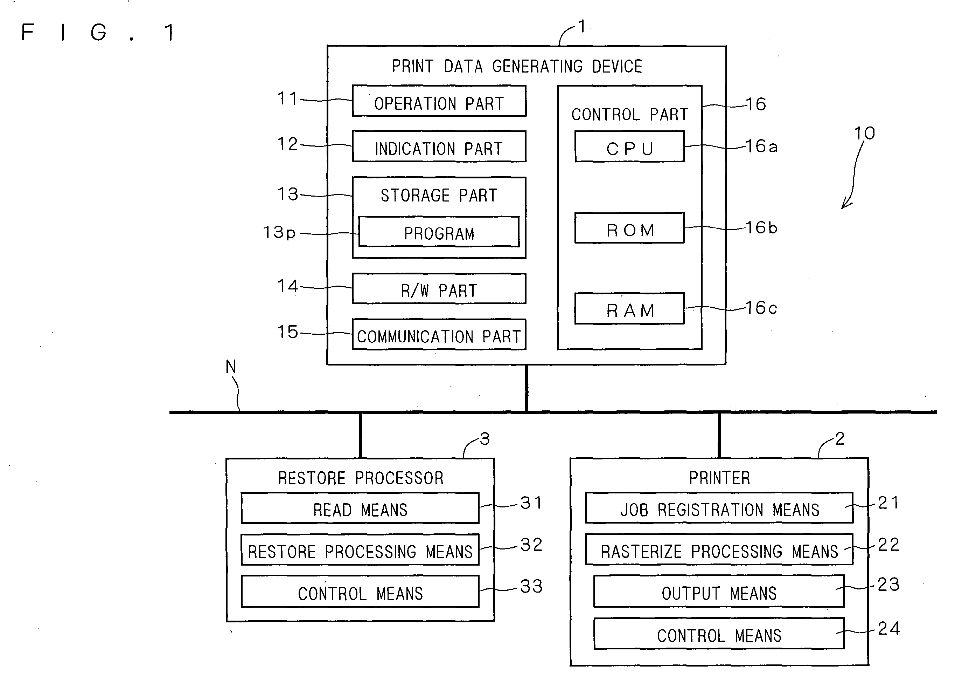

Fig. 1 shows schematically the structure of a print system 10 containing a print data generating device 1 according to a first preferred embodiment of the invention. The print system 10 is a system that generates print layout data (hereinafter referred to simply as "print data"), which is described in a predetermined page description language (PDL) such as portable document format (PDF), and then outputs a printed matter based on the print data. The print system 10 comprises mainly a printer 2 and a restore processor 3, in addition to the print data generating device 1. The print data generating device 1 is connected via a network N to the printer 2 and the restore processor 3.

### <Print Data Generating Device>

The print data generating device 1 is a device to be implemented by a computer, for example. The print data generating device 1 executes a predetermined program 13p to perform the following processing: generation and edition of a text and an image that are represented on a document for generating a printed matter; layout processing for generating layout data by setting, for example, the locations of the text and image on a printing paper; and PDL conversion processing for converting the layout data to layout data of a predetermined PDL format processable in the printer 2. Further, the print data generating device 1 is characterized by generating print data such that the print data itself may be restored from a printed matter, which is obtainable from print processing based on the print data.

As shown in Fig. 1, the print data generating device 1 comprises mainly an operation part 11 composed of a mouse, a keyboard or the like in order for an operator to input various instructions; an indication part 12 such as a display; a storage part 13 composed of a hard disk or the like for retaining the program 13p that causes the computer to function as the print data generating device 1, and others; a R/W part 14 composed of media reader/writer and the like to read/write data with various portable storage media such as DVD-RAM/RW and CD-RW; a communication part 15 functioning as an interface, through which data is delivered with other device on the network N, and with the printer 2 and the restore processor 3; and a control part 16 composed of a CPU 16a, a ROM 16b and RAM 16c, and realizes respective functions to be described later.

In the print data generating device 1, the control part 16, operation part 11 and display part 12 operate to implement a so-called graphical user interface (GUI) that enables to perform processing while displaying, on the indication part 12, the operation contents via the operation part 11, and the progress of various processing. The GUI is also used to perform the processing at respective parts that can be implemented by the control part 16, as will be described later.

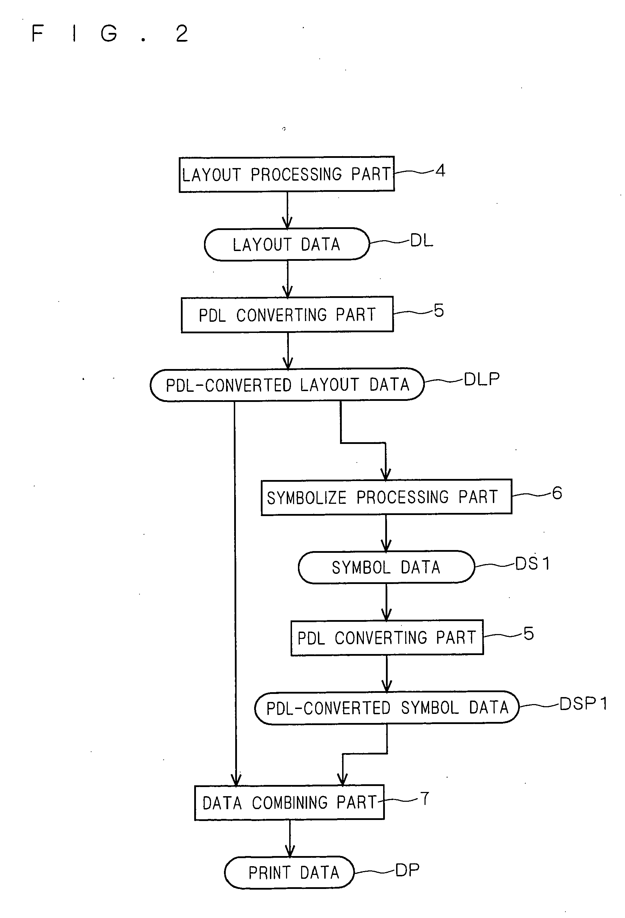

Fig. 2 is a diagram for explaining the functions implemented in the control part 16 of the print data generating device 1. In the control part 16, when executed the predetermined program 13p (see Fig. 1) stored at the storage part 13, the CPU 16a, ROM 16b and RAM 16c operate to implement mainly a layout processing part 4, a PDL converting part 5, a symbolize processing part 6 and a data combining part 7. Fig. 2 also shows the flow of data during various processing in the print data generating device 1.

The layout processing part 4 performs processing for generating layout data of a document. The operation of the layout processing part 4 enables an operator to implement generation and edition of layout objects such as text data and image data via the GUI, as well as generation of layout data DL containing these objects. In the layout data DL, the location on a printing paper for an image expressed by an individual object is determined. Any known processing program is applicable to layout processing.

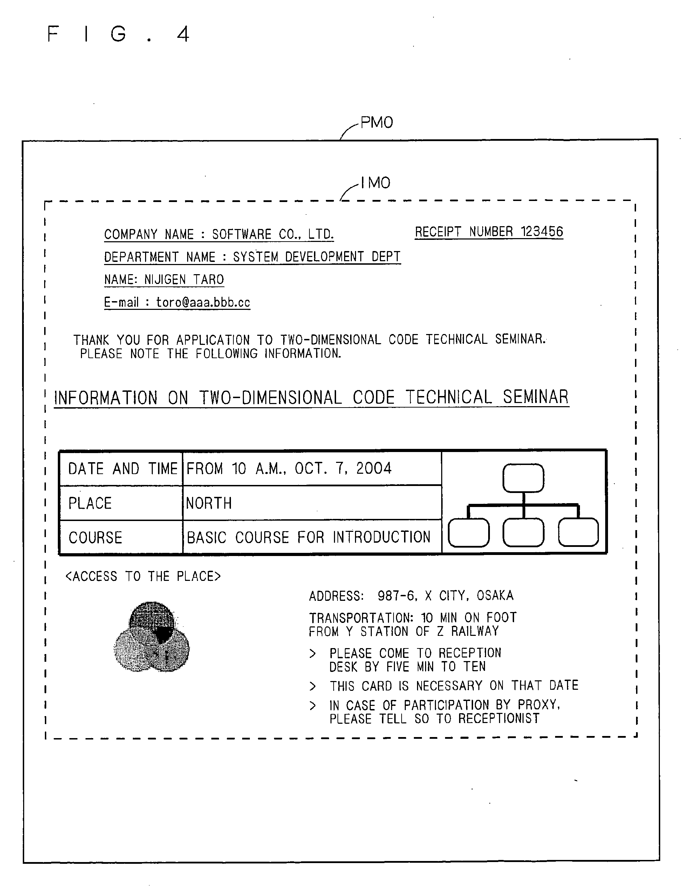

The PDL converting part 5 converts the layout data DL generated at the layout processing part 4 to data described in a predetermined PDL format that can be interpreted by the printer 2. The data generated by this conversion is hereinafter referred to as "PDL-converted layout data DLP." The PDL-converted layout data DLP is described in, for example, PDF format or PostScript (trademark) format. The PDL converting part 5 similarly performs PDL conversion with respect to symbol data DS1, which will next be described. The data generated by the PDL conversion is hereinafter referred to as "PDL-converted symbol data DSP1." Any known processing program is applicable to the PDL conversion. Fig. 4 is a diagram illustrating an image of a printed matter PMO to be obtained if the printer 2 performs print processing by using the PDL-converted layout data DLP. This image corresponds to the finished image of the printed matter desired to generate at the layout stage.

The symbolize processing part 6 symbolizes the PDL-converted layout data DLP. The term "symbolization" means to generate image data representing a single or a plurality of image objects by encoding the description contents of the PDL-converted layout data DLP, according to a predetermined algorithm. Image data representing a symbol, which can be obtained by symbolization, is hereinafter referred to as "symbol data DS1".

Symbolize processing corresponds to, for example, processing for generating a bar code, and processing for generating a stack type two-dimensional code or a matrix type two-dimensional code (QR code, etc.). Specifically, such as bar code and QR code to be obtained by encoding correspond to symbols in the first preferred embodiment. However, any symbolization technique needs to be a reversible encoding technique permitting faithful restore of data by decoding, because, in the subsequent stages, decode processing is performed based on the symbols so that the PDL-converted layout data DLP is restored, as will be described later. In the processing at the symbolize processing part 6, symbolization is carried out by using one of such different symbolization techniques.

In the first preferred embodiment, a single PDL-converted layout data DLP might yield a plurality of image objects, depending on the type of symbolize processing employed. Therefore, each image object so obtained and its representation on a printed matter are hereinafter referred to as "unit symbol," image data representing a unit symbol is referred to as "unit symbol data," and a set of unit symbols generated from a single PDL-converted layout data DLP is generally referred to as "symbol." The number of unit symbols generated from a single PDL-converted layout data DLP can be determined variously according to the data size of the PDL-converted layout data DLP, the type of symbolization technique, and the processing conditions thereof. In other words, a symbolization technique may be selected and the number of symbols may be set, depending on the representation contents of a printed matter, paper size, and the magnitude of a margin. If a plurality of unit symbols SBn are generated, that is, if the PDL-converted layout data DLP is split and encoded, it is necessary to obtain information such as the order of decoding from the respective symbols, and the order of combining of decoded data, such that the original PDL-converted layout data DLP may be restored exactly in the restore processing of a restore processor 3 described later. To cope with this, a description indicating the relationship among individual unit symbols SBn may be added when they are generated, or the order of decoding may be previously determined.

The symbol data DS1 obtained through symbolization becomes a target for PDL conversion in the PDL converting part 5, as above described.

The data combining part 7 combines the PDL-converted layout data DLP with the PDL-converted symbol data DSP1. This realizes a state in which a symbol represented by the PDL-converted symbol data DSP1 is added to a printed matter represented based on the PDL-converted layout data DLP. Strictly speaking, in addition to the PDL-converted symbol data DSP1, information for defining the location of a symbol SB on the printed matter is also combined with the PDL-converted layout data DLP. During data combining, it is preferable for an operator to set, via the GUI, the location of a symbol to anywhere within a predetermined range on the printed matter, so that information of the established location is combined to the PDL-converted layout data DLP. Alternatively, a description for reserving the location of the symbol SB is previously written in the PDL-converted layout data DLP, and the PDL-converted symbol data DSP1 is combined such that the symbol may be laid at the reserved location. In any case, it is preferable to carry out combining as the symbol may be laid at such a region as not to interfere with any contents initially desired to represent on a printed matter, for example, such a region that should originally become a margin. Preferably, the printing color of the symbol SB is determined such that the symbol SB may be printed in a color composition clearly distinguishable from the ground color of a printing paper, thereby permitting exact reading in restore processing to be described later.

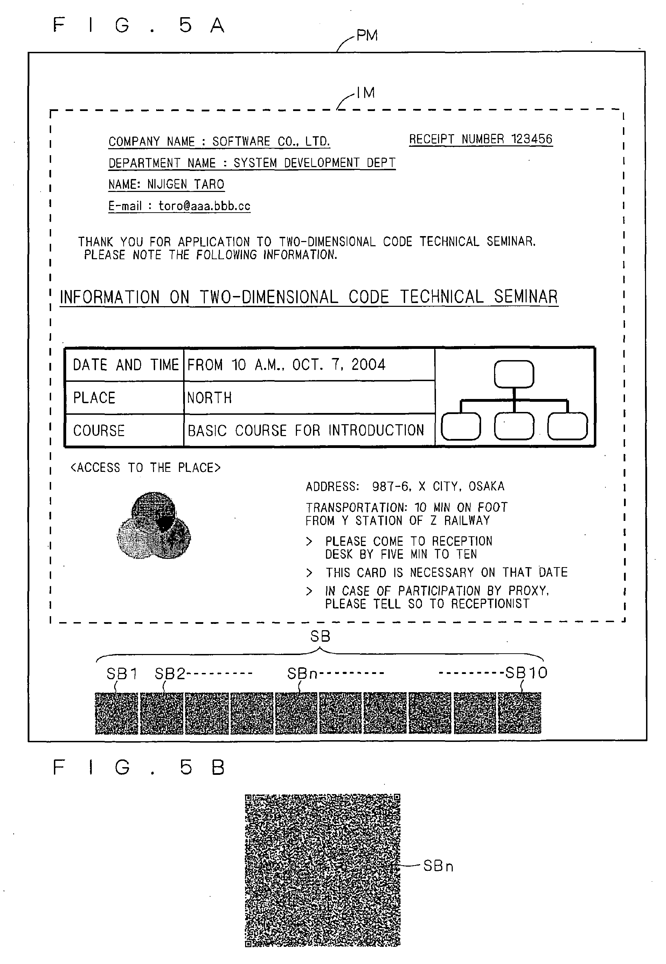

The data obtained by the above combining is the print data DP. This data is then delivered to the printer 2. Fig. 5A illustrates a printed matter PM obtained by print processing using the print data DP, when a QR code generation processing is employed as a symbolization technique. Fig. 5B shows in enlarged dimension one of unit symbols SBn. The printed matter PM represents a state in which the symbol SB is added to a substantive image IM that is identical with the substantive image IM0 on the printed matter PMO shown in Fig. 4. Specifically, the print data DP as a whole is layout data described in PDL format. Therefore, if the printer 2 receives this layout data and performs its print processing, the result is a printed matter in which the symbol represented by the PDL-converted symbol data DSP1 is added to the substantive image IM (identical with the substantive image IM0 on the printed matter PMO in Fig. 4), which should initially be represented by the layout data DL.

Although Fig. 5A illustrates the case where the symbol SB is composed of ten symbols SBn (SB 1 to SB 10), the number of the unit symbol SB should not be limited to this number.

### <Printer>

The printer 2 is a device that performs output processing of a printed matter according to print data described in a predetermined PDL format, which has been generated in the print data generating device 1. For example, the printer 2 is a so-called digital printer using no printing plate. The printer 2 comprises mainly job registering means 21, rasterize processing means 22, output means 23, and control means 24.

The job registering means 21 associates the processing conditions information on the processing necessary for print processing based on print data received from the exterior of the printer 2, with the print data, and then registers this as a print job in storage means (not shown). The processing conditions information contains the conditions for rasterizing print data described in PDL format, and the conditions for output processing, which are suitably set by the operator of the printer 2. Alternatively, the processing conditions information may be delivered to the printer 2 together with print data, as data in job definition format (JDF), for example. A plurality of such print jobs can be registered in the printer 2. Printing in the printer 2 can be implemented by executing, in response to the operator's selection of a print job containing target print data in a predetermined method, the processing based on the description contents of the selected print job.

The rasterize processing means 22 performs rasterize processing of print data according to the conditions set as processing conditions information. The output means 23 performs, in electrostatic photography or the like, the output processing of raster data obtained by rasterize processing, according to the conditions set as processing conditions information. The control means 24 performs operational control of the respective parts, which may be implemented by a computer, for example.

Alternatively, the printer 2 may not a digital printer and it may perform output processing by using a printing plate. In this case, the printer 2 will be composed of a device used in the step of making a printing plate (e.g., an image setter and a CTP device), and an output device that outputs a printed matter by using a printing plate.

### <Restore Processor>

The restore processor 3 restores, from a printed matter PM with the above-mentioned symbol printed thereon, print data about representation contents of this printed matter (more specifically, the PDL layout data representing the substantive image IM of the printed matter PM). The restore processor 3 comprises mainly read means 31, restore processing means 32, and control means 33.

The read means 31 reads the image of the printed matter PM, or at least the symbol SB represented on the printed matter PM. The read means 31 may be suitably configured according to the type of symbolize processing and the arrangement of the symbol SB. The read means 31 may be implemented by a general purpose image read device or an image pickup device such as an image scanner or a digital camera, and it may be configured by a dedicated read device such as a two-dimensional code reader or a barcode reader. The read means 31 enables to obtain image data that is electronic data of the symbol SB on the printed matter PM.

The restore processing means 32 restores information contained in a symbol SB, more specifically PDL-converted layout data DLP representing a printed matter PMO, by decoding individual image data captured by reading the symbol SB, in a technique corresponding to the generation technique (encoding technique) of the image data.

If the symbol SB is composed of a plurality of unit symbols SBn, the relationship in processing timing between the reading of the symbol SB by the read means 31 and the decoding by the restore processing means 32 can be assumed variously, depending on the type of the read means 31, the type of symbol SB, the arrangement of a printed matter. For example, after reading all unit symbols SBn at a time (or per printed matter PM), individual image data for each unit symbol SBn is generated and then decoded. Alternatively, every time an individual unit symbol SBn is read, this symbol may be decoded chronologically. In any case, all of the unit symbols SBn may be decoded and combined, thereby enabling the PDL-converted layout data DLP to be restored.

The control means 33 performs operational control of the respective parts. For example, a computer can implement the restore processing means 32 and the control means 33. Specifically, the restore processor 3 can be configured by electrically connecting predetermined read means to a computer.

### <Print Data Generation>

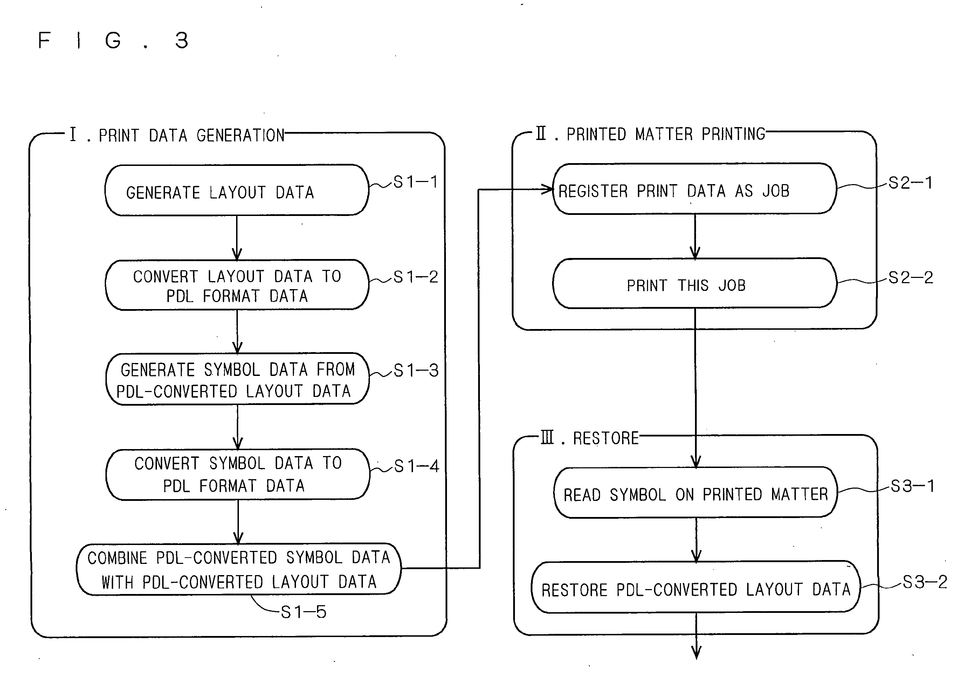

The following is a description of the flow of processing related to generation, printing and restoring of print data that can be implemented in the print system 10. Fig. 3 shows the flow of these processing.

The generation of print data DP in the print data generating device 1 will now be described. The following is based on the assumption that a variety of data to be generated in the course of the generation of print data DP are stored suitably at the storage part 13 or the RAM 16c; and that QR coding is employed as a symbolization technique.

When an operator supplies, via the operation part 11, a predetermined execute instruction to the print data generating device 1, a GUI for layout edition is activated. A predetermined operation of the operator via the GUI implements generation of layout data DL in which a text and an image etc. are laid in a desired state (step S1-1).

After generating the layout data DL, in response to a predetermined execution instruction given by the operator via the operation part 11, the PDL converting part 5 executes a predetermined PDL conversion of the layout data DL, thereby generating PDL-converted layout data DLP (step S1-2). It is assumed that the image of the printed matter PMO as shown in Fig. 4 is image obtained by subjecting the generated PDL-converted layout data DLP to print processing.

After obtaining the PDL-converted layout data DLP, in response to a predetermined execution instruction given by the operator via the operation part 11, the symbolize processing part 6 symbolizes the description contents of the PDL-converted layout data DLP according to preset symbolization technique and processing conditions, thereby generating symbol data DS1 (step S1-3). As mentioned above, the symbolization of one PDL-converted layout data DLP might generate a plurality of unit symbol data representing a plurality of unit symbols SBn. As shown in Fig. 5A, in the case of printing ten unit symbols SB1 to SB10, ten unit symbol data are being generated. The split number when symbol data is split and generated into a plurality of unit symbol data, namely the number of symbols may be set suitably at the time of symbolization, unless it exceeds data capacity to be encoded for each symbol.

After obtaining the symbol data DS1, the PDL converting part 5 continuously operates to perform PDL conversion of the symbol data DS1 as in the layout data DL, thereby generating PDL-converted symbol data DSP1 (step S1-4). In the above case, PDL conversion is carried out for each of the ten unit symbol image data, resulting in the PDL-converted symbol data as data set of the after-conversion data. This processing enables a symbol image to be printed on a printed matter.

After obtaining the PDL-converted symbol data DSP1, the data combining part 7 operates to combine the PDL-converted symbol data DSP1 with the PDL-converted layout data DLP, thereby generating print data DP that is one layout data described in PDL format (step S1-5). The data combining may be carried out after an operator executes a predetermined operation to determine the locations of individual unit symbols. Alternatively, the data combing may be processed such that a unit symbol may be laid at the reserved location.

The obtained print data DP is then delivered via a network to the printer 2 at a proper timing. Alternatively, the R/W part 14 may store the print data DP in a portable storage medium and then delivered to the operator of the printer 2.

### <Print Processing>

The following is print processing based on the print data DP, which may be carried out in the printer 2.

As discussed above, the print data generated in the print data generating device 1 is delivered via the network N to the printer 2. Alternatively, the printer 2 may receive print data by reading the print data stored in a portable storage medium through read means (not shown).

In the printer 2, the job registration means 21 operates to register a print job for the received print data DP (step S2-1). Then any one of the registered print jobs is selected, in response to which the print processing related to the selected print job is carried out to generate a printed matter (step S2-2). Specifically, the rasterize processing means 22 operates to rasterize print data according to the conditions set as processing conditions information to the print job. The output means 23 operates to perform output processing based on the raster data obtained by the rasterize processing, according to the conditions set as processing condition information.

Since in the first preferred embodiment the print data DP is generated so as to contain the PDL-converted symbol data DSP1, the execution of print processing of the print data DP results in the printed matter PM, in which the symbol SB is added to the substantive image IM desired originally as shown in Fig. 5A.

### <Print Data Restoring>

The following is processing of restoring print data, more specifically the PDL-converted layout data DLP that is layout data for printing, from the printed matter PM shown in Fig. 5A. For the sake of simple description, it is prespecified that decoding should be made in sequence from image data related to a unit symbol SB1 located at the left end of the printed matter PM. Since the symbol is formed by a QR code, the restore processor 3 is configured such that the read means 31 may read the QR code, and the restore processing means 32 may restore the original data from the image data of the QR code.

First, the read means 31 of the restore processor 3 reads in sequence from the unit symbol SB 1 locating at the left end in the symbol SB printed on the printed matter PM, and generates image data of individual unit symbols SBn (corresponding to unit symbol data) (step S3-1). For the printed matter PM shown in Fig. 5A, ten unit symbols SB 1 to SB 10 are printed as a QR code, and therefore ten image data each representing a QR code will be generated.

After obtaining the image data of the symbol SB, the restore processing means 32 then operates to decode in sequence the ten image data. Specifically, a known technique capable of decoding QR codes may be used. The decoded data are then combined according to the combining order set at the time of encoding. The completion of the combining of all data renders the PDL-converted layout data DLP restored (step S3-2).

As discussed above, the PDL-converted layout data DLP is data that, if subjected to print processing in the printer 2, enables the printed matter PMO to be obtained as shown in Fig. 4. This data corresponds to the image of the printed matter PM in Fig. 5A, except for the symbol SB. In other words, the PDL-converted layout data DLP is data representing only the substantive image IM on the printed matter PM, namely, data from which it is possible to generate a printed matter desired to produce at the stage of layout. That is, through the above restore processing, the print layout data representing the contents of a printed matter can be restored faithfully from the printed matter. This data is the same as the data that has been obtained by layout processing and PDL conversion at the initial stage of producing the printed matter. Therefore, once a printed matter is kept, its data can be restored at all times.

Thus, in accordance with the first preferred embodiment, it is possible to faithfully restore, from the state of a printed matter, print layout data for obtaining the printed matter. This eliminates the necessity for retaining data in electronic data format. The printed matter may be kept, and restore processing may be carried out as needed, thereby facilitating reuse of the layout data. In other words, backup data of the print data may be kept in the state of a paper medium so as to reuse this backup data as needed. For example, in the case of printing by a digital printer with no printing plate, whose printing steps are relatively simple, keeping its printed matter may be substituted for storing printing plate in the case of printing with plate, whose printing steps are relatively complicated.

### <Second Preferred Embodiment>

### <System Configuration>

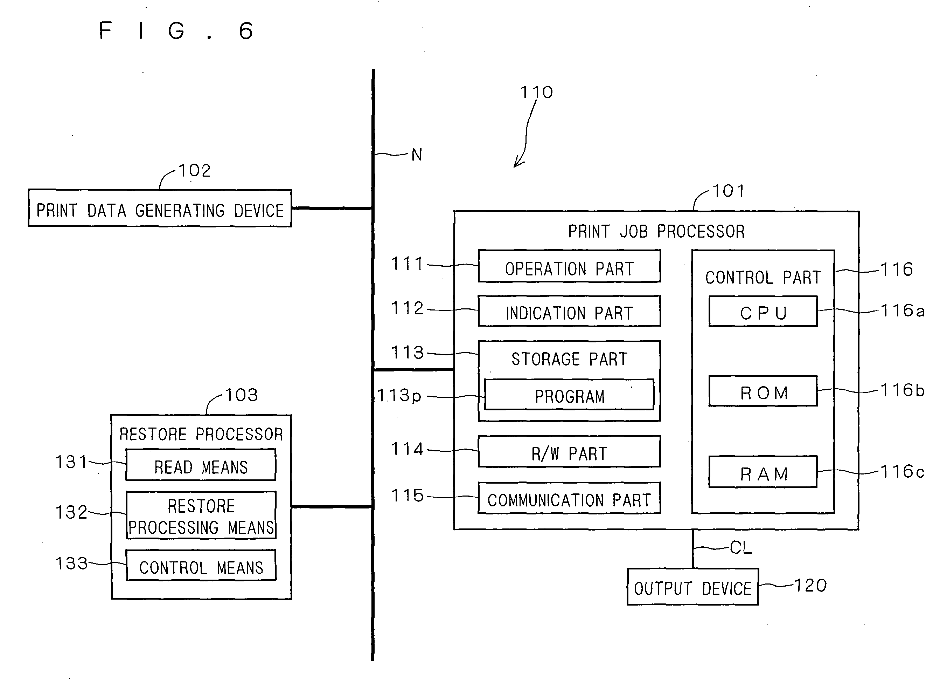

Fig. 6 shows schematically the structure of a print system 110 containing a print job processor 101 according to a second preferred embodiment of the invention. The print system 110 comprises mainly a layout data generating device 102 and a restore processor 103, in addition to the print job processor 101. The print job processor 101, the layout data generating device 102 and the restore processor 3 are connected to each other via a network N. An output device 120 is electrically connected via a communication line CL to the print job processor 101.

The print system 110 is a system that performs, per print job data, the output of a printed matter based on layout data described in a predetermined page description language (PDL) such as portable document format (PDF).

The term "print job data" means data containing layout data and various print processing conditions in printing a printed matter base on this layout data, or means data set in which the former and the latter are associated with each other. The print job processing unit 101 generates and manages the print job data. In the following, layout data and print processing conditions may be described as being in association with print job data, and the term association embraces the case where the layout data and print processing conditions themselves are described in the print job data.

In the second preferred embodiment, print processing is carried out, with print job data as a unit of processing. Specifically, when the operator of the print job processor 101 selects a desired one from a plurality of print jobs stored in a storage part 113 to be described later (each corresponding to the identification name of print job data), in order to instruct the execution of printing, the print job processor 101 employs, as data to be printed (hereinafter referred to as "print target data"), layout data that is associated with this print job data or described in this print job data, and rasterizes this layout data according to the contents of print processing conditions described in the selected print job data, and then causes the output device 120 to perform output processing.

### <Layout Data Generating Device>

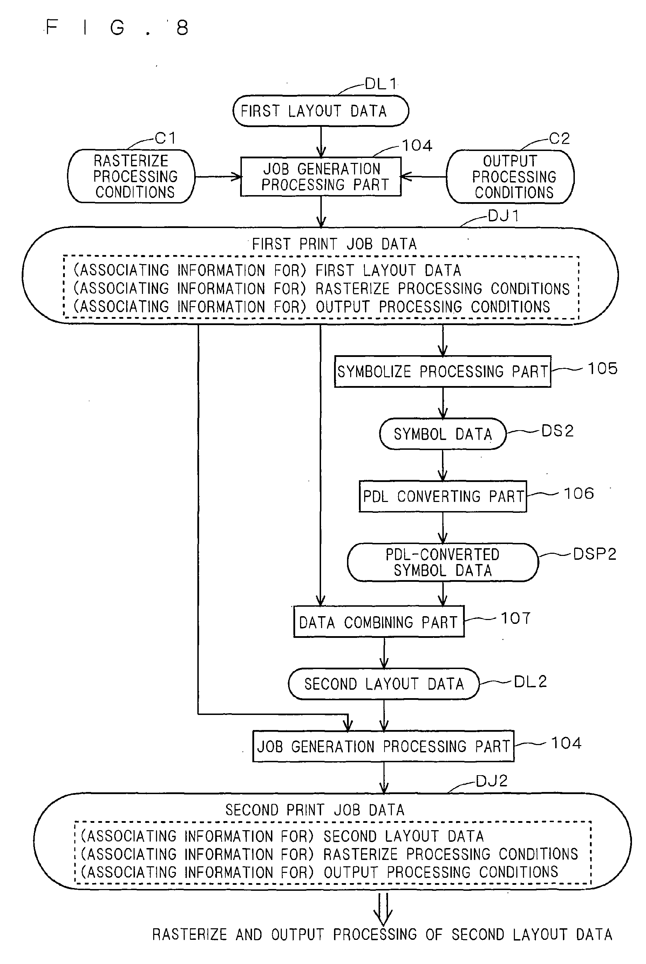

The layout data generating device 102 is a device to be implemented by a computer, for example. The layout data generating device 102 executes a predetermined processing program to perform the following operator processing: the generation and edition of layout objects such as text data and image data; and the setting of locations on a printing paper for images represented by these objects. These processing in the layout data generating device 102 enables first layout data DL1 (Fig. 8) to be generated. The first layout data DL1 can be generated as data described in a predetermined PDF format that can be interpreted in print processing. Examples of PDL used for description are PDF format and PostScript (trademark) format. Any known technique is applicable to the generation of the first layout data DL1 in the layout data generating device 102.

### <Print Job Processor>

The print job processor 101 performs processing related to the generation of print job data that is a unit of processing in print processing, and the management of print job data. In addition, it also performs control of operation related to output processing in the output device 120. Further, the print job processor 101 is characterized by that print job data may be restored from a printed matter obtained by print processing based on the print job data.

The print job processor 101, which is for example a device to be implemented by a computer, comprises mainly an operation part 111 composed of a mouse, a keyboard or the like in order for an operator to input various instructions; an indication part 112 such as a display; a storage part 113 composed of a hard disk or the like retaining a program 113p, etc. that causes the computer to function as the print job processor 101; a R/W part 114 composed of media reader/writer and the like to read/write data with various portable storage media such as DVD-RAM/RW and CD-RW; a communication part 115 functioning as an interface, through which data is delivered with other device on the network N, and with the output device 120 via a communication line CL; and a control part 116 composed of a CPU 116a, a ROM 116b and RAM 116c, and implements respective functions to be described later.

In the print job processor 101, the respective functions of the control part 116, operation part 111 and display part 112 implement so-called graphical user interface (GUI) that enables to perform processing while displaying, on the indication part 112, the operation contents via the operation part 111, and the progress of various processing. The GUI is also used to perform the processing at respective parts that can be implemented by the control part 116.

Alternatively, the print job processor 101 and the output device 120 may be housed in a casing and integrated into a single printer. Besides this, in the print job processor 101, the functions of the operation part 111 and the indication part 112 may be implemented in a composite form like a touch panel.

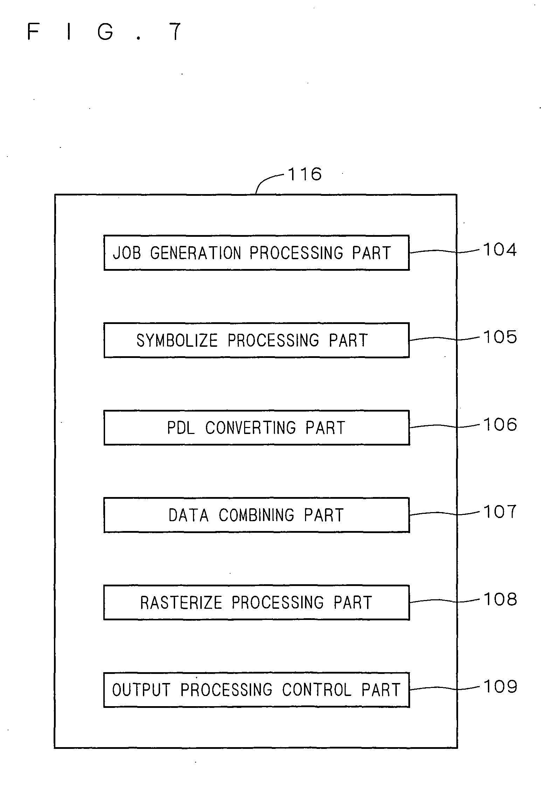

Fig. 7 illustrates respective parts to be implemented in the control part 116 of the print job processor 101. In the control part 116, when executed the predetermined program 113p (see Fig. 6) stored at the storage part 113, the CPU 116a, ROM 116b and RAM 116c operate to implement mainly a job generation processing part 104, a symbolize processing part 105, a PDL converting part 106, and a data combining part 107, a rasterize processing part 108, and an output processing control part 109. Fig. 8 illustrates the flow of data between these parts.

The job generation processing part 104 generates print job data that associate layout data received from the exterior, with print processing conditions necessary for print processing based on this layout data; or that describes integrally the former and the latter. In the second preferred embodiment, the print job data so obtained is particularly referred to as "first print job data DJ1," in order to distinguish from second print job data DJ2 to be described later.

Examples of print processing conditions contained in print job data (the first print job data DJ1) or associated therewith are rasterize processing conditions C1 that is processing conditions when the rasterize processing part 108 rasterizes layout data described in PDL format; and output processing conditions C2 that is processing conditions when the output device 120 outputs the rasterized data. The rasterize processing conditions C1 includes the number of decomposed color compositions and output resolution and so on. The output processing conditions C2 includes information on the output of the output device 120, such as a type of halftone dot and dot gain information, as well as the number of prints and paper size. These print processing conditions can be set suitably by the operator of the print job processor 101, via a predetermined input dialog (not shown) that can be implemented by the operation of the job generation processing part 104.

Alternatively, print job data may be described in job definition format (JDF). In this case, the information necessary for the subsequent step may also be previously described, in addition to the information necessary for rasterize processing and output processing. In the case of employing JDF format, it is also possible to describe previously, in JDF format, not only layout data but also the information on rasterize processing conditions and output processing conditions, and then deliver this to the print job processor 101.

It is assumed here that the image of the printed matter PMO in Fig. 4 is also an image obtained if the first print job data DJ1 is used to perform print processing in the second preferred embodiment, namely if the first layout data DL1 is used as print target data. In other words, the image of the printed matter PMO corresponds to the finished image of the printed matter desired to produce at the layout stage (the image represented by the first layout data DL1). However, the print processing in the second preferred embodiment is actually carried out for the second print job data DJ2 described later.

The symbolize processing part 105 symbolizes the first job data DJ1. The term "symbolization" means to generate image data representing a single or a plurality of image objects by encoding the description contents of the first job data DJ1 according to a predetermined algorithm. Image data representing a symbol, which can be obtained by symbolization, is hereinafter referred to as "symbol data DS2."

Symbolize processing corresponds to, for example, processing for generating a bar code, and processing for generating a stack type two-dimensional code or a matrix type two-dimensional code (QR code, etc.). Specifically, such as bar codes or QR codes that can be obtained by encoding correspond to symbols in the second preferred embodiment. However, symbolization technique needs to be a reversible encoding technique permitting faithful restore of data through decoding, because, in the subsequent stages, decoding processing is performed so that based on the symbols the first print job data DJ1 is restored, as will be described later. In the processing at the symbolize processing part 105, symbolize processing is carried out by using one of such a variety of symbolization techniques.

In the second preferred embodiment, a single first print job data DJ1 might yield a plurality of image objects, depending on the type of symbolize processing employed. Therefore, each image object obtained and its representation on a printed matter are hereinafter referred to as "unit symbol," image data representing a unit symbol is referred to as "unit symbol data," and a set of unit symbols generated from a single first print job data DJ1 is generally referred to as "symbol." The number of unit symbols to be generated from a single first print job data DJ 1 can be determined variously according to the data size of the first print job data DJ1, the type of symbolization technique used, and the processing conditions thereof. In other words, a symbolization technique may be selected and the number of symbols may be set, depending on the representation contents of a printed matter, paper size, and the magnitude of margin. If a plurality of unit symbols SBn are generated, that is, if the first print job data DJ1 is split and encoded, it is necessary to obtain information, such as the order of decoding from the respective symbols and the order of combining of decoded data, such that the original first print job data DJ1 may be restored exactly in the restore processing at a restore processor 103 described later. To cope with this, a description indicating the relationship among individual unit symbols SBn may be added when they are generated, or the order of decoding may be previously determined.

The PDL converting part 106 converts the symbol data DS2 generated at the symbolize processing part 105 to data described in the same PDL format as that used in describing the first layout data DL1. The data generated by this conversion is hereinafter referred to as "PDL-converted symbol data DSP2." Any known processing program is applicable to PDL conversion.

The data combining part 107 rewrites the first layout data DL1 by adding PDL-converted symbol data DSP2 to the first layout data DL1 constituting the first print job data DJ1, thereby generating second layout data DL2. Since the generation of the second layout data DL2 corresponds to the processing of adding a new object composed of a symbol SB to the first layout data DL1, information that defines the location of the symbol SB is also described in the second layout data DL2.

In the second preferred embodiment, the second layout data DL2 becomes a target for print processing. Print job data using the second layout data DL2 as a print processing target is hereinafter referred to as "second print job data DJ2."

However, only rewriting the first layout data DL1 into the second layout data DL2 causes no change of print processing target. Hence, upon the generation of the second layout data DL2 based on the first layout data DL1, a predetermined processing is suitably carried out, such that the job generation processing part 104 may operate to specify the second layout data DL2 as print target data about the second print job data DJ2. For example, the description contents related to the print target data may be rewritten. Alternatively, the same file name as the first layout data DL1 may be given to the second layout data DL2, that is, data may be overwritten.

In the case of directly describing the first layout data DL1 on the first print job data DJ1, the processing of rewriting the first layout data DL1 into the second layout data DL2 directly corresponds to the processing of directly changing the print target data from the first layout data DL1 to the second layout data DL2.

The execution of print processing based on the second print job data DJ2 so obtained results in a state in which the symbol represented by the PDL-converted symbol data DSP2 is added to the resulting printed matter.

At the time of data combining, it is preferable that an operator may set, via the GUI, the location of a symbol to anywhere within a predetermined range on the printed matter, so that information on the established location is combined to the first layout data DL1. Alternatively, a description for reserving the location of the symbol SB is previously described in the first layout data DL1, and the PDL-converted symbol data DSP2 is combined such that the symbol may be laid at the reserved location. In any case, it is preferable to carry out combining as the symbol may be laid at such a region as not to interfere with any contents initially desired to represent on a printed matter, for example, such a region that should become a margin. Preferably, the printing color of the symbol SB is determined such that the symbol SB may be printed in a color composition clearly distinguishable from the ground color of a printing paper, thereby permitting exact reading in restore processing described later.

The rasterize processing part 108 rasterizes the second layout data DL2, to which the PDL-converted symbol data DSP2 has been added, according to the rasterize processing conditions C1 described in the print job data.

The output processing control part 109 controls the operation of the output device 120. This control causes the output device 120 to perform output processing of the raster data obtained by rasterize processing, based on the output processing conditions C2 described in the print job data.

In the second preferred embodiment, it is assumed that the printed matter PM illustrated in Fig. 5A is obtainable from print processing using the second print job data DJ2, which have been obtained by symbolizing the first print job data DJ1 when the processing of generating a QR code is used as symbolize processing. In the second preferred embodiment, Fig. 5B is again referred to as a diagram showing in enlarged dimension one of unit symbols SBn. Also in this case, the printed matter PM represents the state in which the symbol SB is added into the same substantive image IM as the substantive image IM0 on the printed matter PMO shown in Fig. 4. This results in a printed matter obtained by adding the symbol represented by the PDL-converted symbol data DSP2 to the substantive image IM (identical with the substantive image 1M0 on the printed matter PMO in Fig. 4), which should initially be represented by the first layout data DL1.

Although Fig. 5A illustrates the case where the symbol SB is composed of ten symbols SBn (SB 1 to SB 10), the number of the unit symbol SB should not be limited to this number.

### <Output Device>

The output device 120 is a device for performing output processing of a printed matter according to print job data generated in the print job processor 101. More specifically, the output device 120 performs output processing based on raster data, which can be obtained by subjecting the layout data concerning the print job data to rasterize processing at the rasterize processing part 108 of the print job processor 101. For example, the output device 120 is a so-called digital printer using no printing plate. Alternatively, it may be composed of a device for making a printing plate (e.g., an image setter or a CTP device), and a device that prints a printed matter by using the printing plate.

The contents of rasterize processing prior to output varies according to the type of the output device 120 to be used. Hence, the type of parameter and the preset value, which should be set as rasterize processing conditions C1 in the print job processor 101, varies according to the output device 120. As might be expected, the contents of output processing vary according to the type of the output device 120. Hence, the type of parameter and the preset value, which should be set as the output processing conditions C2, also vary according to the output device 120.

### <Restore Processor>

The restore processor 103 restores, from a printed matter PM with the above-mentioned symbol printed thereon, print job data that had been generated for outputting the printed matter (i.e., the first print job data DJ1). The restore processor 103 comprises mainly read means 131, restore processing means 132, and control means 133.

The read means 131 reads the image of a printed matter PM, or at least a symbol SB represented on the printed matter PM. The read means 131 may be suitably configured according to the type of symbolize processing and the arrangement of the symbol SB. The read means 131 may be implemented by a general purpose image read device or an image pickup device such as an image scanner or a digital camera, and it may be configured by a dedicated read device such as a two-dimensional code reader or a barcode reader. The read means 131 enables to capture image data that is electronic data of the symbol SB on the printed matter PM.

The restore processing means 132 restores information contained in the symbol SB, more specifically the first print job data DJ1 representing the printed matter PMO, by decoding individual image data captured by reading the symbol SB, in a technique corresponding to the generation technique of this image data.

If the symbol SB is composed of a plurality of unit symbols SBn, the relationship in processing timing between the reading of the symbol SB by the read means 131 and the decoding by the restore processing means 132 can be assumed variously, depending on the type of the read means 131, the type of symbol SB, the arrangement of a printed matter. For example, after reading all unit symbols SBn at a time (or per printed matter PM), individual image data of the respective unit symbols SBn are generated and then decoded. Alternatively, every time an individual unit symbol SBn is read, this symbol is decoded chronologically. In any cases, all of the unit symbols SBn are decoded and combined with each other, thereby enabling the print job data DJ 1 to be restored.

The control means 133 performs operational control of the respective parts. For example, a computer can implement the restore processing means 132 and the control means 133. Specifically, the restore processor 103 can be configured by electrically connecting predetermined read means to a computer.

### <Print Job Data Generation>

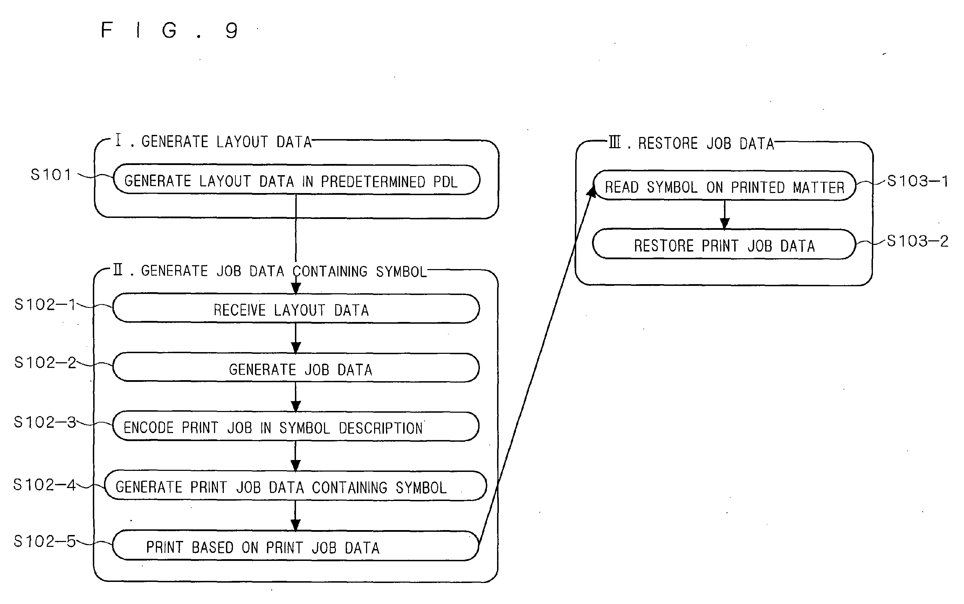

The following is a description of the flow of processing related to generation, printing and restoring of print job data that can be implemented in the print system 110. Fig. 9 shows the flow of these processing

The generation of print job data DJ2 in the print job processor 101 will now be described. The following is based on the assumption that a variety of data to be generated in the course of the generation of print job data DJ2 are stored suitably at the storage part 113 or the RAM 116c; and that QR coding is employed as a symbolization technique.

First, an operator carries out a suitable processing via a predetermined GUI that can be implemented by execution of a predetermined program in the layout data generating device 102, thereby generating first layout data DL1 representing a printed matter in which a text and an image etc. are laid in a desired state (step S101). The first layout data DL1 is described in a predetermined PDL format.

The generated first layout data DL1 is delivered via the network N to the print job processor 101 (step S102-1). Alternatively, the R/W part 114 may read the first layout data DL1 stored in a portable storage medium, so that the print job processor 101 may receive the first layout data DL1.

After obtaining the first layout data DL1, the rasterize processing conditions C1 and the output processing conditions C2 are determined as print processing conditions for the first layout data DL1, through a predetermined setting dialogue to be implemented by the operation of the job generation processing part 104. These processing conditions are then associated with the first layout data DL1, thereby generating first print job data DJ1 (step S 102-2).

After obtaining the first print job data DJ1, in response to a predetermined execution instruction given by the operator via the operation part 11, the symbolize processing part 105 symbolizes the description contents of the first print job data DJ1 according to preset symbolization technique and processing conditions, thereby generating symbol data DS2 (step S 102-3). As mentioned above, the symbolization of one first print job data DJ1 might generate a plurality of unit symbol data representing a plurality of unit symbols SBn. As shown in Fig. 5A, in the case of printing ten unit symbols SB1 to SB 10, ten unit symbol data are being generated. The split number when symbol data is split and generated into a plurality of unit symbol data, namely the number of symbols may be set suitably at the time of symbolization, unless it exceeds data capacity to be encoded for each symbol.

After obtaining the symbol data DS2, the PDL converting part 106 continuously operates to perform PDL conversion of the symbol data DS2, thereby generating PDL-converted symbol data DSP2. The data combining part 107 operates to combine the PDL-converted symbol data DSP2 with the first layout data DL1, thereby generating second layout data DL2. The job generation processing part 104 operates to have this second layout data DL2 become a target for print processing, thereby generating second print job data DJ2 (step S102-4). In the above case, PDL conversion is carried out for each of the ten unit symbol image data, and the PDL symbol data can be obtained as data set of the after-conversion data. This processing enables a symbol image to be printed on a printed matter. The data combining may be carried out after an operator executes a predetermined operation to determine the locations of individual unit symbols. Alternatively, the data combing may be processed such that a unit symbol may be laid at a preset location.

The obtained second print job data DJ2 is subjected to print processing at a proper timing. For example, a plurality of second print job data DJ2 are stored in the storage part 113. If selected any one of them, in response to this, the rasterize processing and output processing for the selected second print job data DJ2 are carried out to generate a printed matter (step S 102-5). In printing, first, the rasterize processing part 108 operates to rasterize the second layout data DL2 described in the second print job data DJ2 according to the rasterize processing conditions C 1 described in the second print job data DJ2. The output processing control part 109 controls the output device 120 such that it may perform output processing of raster data obtained by the rasterize processing, according to the output processing conditions C2.

Since in the second preferred embodiment the second layout data DL in the second print job data DJ2 contains the PDL-converted symbol data DSP2, the execution of print processing of the second print job data DJ2 results in a printed matter PM, in which the symbol SB to be represented based on the PDL-converted symbol data DSP2 is added to the substantive image IM that should originally be represented based on the first layout data DL1, as shown in Fig. 5A.

### <Print Data Restoring>

The following is processing of restoring print job data, more specifically the first print job data DJ1 that implements print processing of the substantive image IM of the printed matter PM, from the printed matter PM shown in Fig. 5A. For the sake of simple description, it is prespecified that decoding should be made in sequence from image data related to a unit symbol SB1 located at the left end of the printed matter PM. Since the symbol is formed by a QR code, the restore processor 103 is configured such that the read means 131 may read the QR code, and the restore processing means 132 may restore the original data from the image data of the QR code.

First, the read means 131 of the restore processor 103 reads in sequence from the unit symbol SB1 locating at the left end in the symbol SB printed on the printed matter PM, and generates image data of each unit symbol SBn (corresponding to unit symbol data) (step S103-1). For the printed matter PM shown in Fig. 5A, ten unit symbols SB1 to SB 10 are printed as a QR code, and therefore ten image data each representing a QR code will be generated.

After obtaining the image data of the symbol SB, the restore processing means 132 then operates to decode in sequence the ten image data. Specifically, a known technique capable of decoding QR codes is usable. The decoded data are combined according to the combining order set at the time of encoding. The completion of the combining of all data renders the first print job data DJ1 restored (step S 103-2).

As discussed above, the first print job data DJ1 is data that, if subjected to print processing, enables the printed matter PMO to be obtained as shown in Fig. 4. This data corresponds to the image of the printed matter PM in Fig. 5A, except for the symbol SB. In other words, the first print job data DJ1 is data representing only the substantive image IM in the printed matter PM, namely, data from which it is possible to generate a printed matter desired to produce at the stage of layout. Therefore, once its printed matter is kept, print job data for generating a printed matter containing its substantive contents can be restored at all times.

Thus, in accordance with the second preferred embodiment, it is possible to faithfully restore, from the state of a printed matter, the print job data for obtaining the printed matter. This eliminates the necessity for retaining data in electronic data format. Printed matter may be kept and restore processing may be carried out as needed, thereby facilitating reuse of print job data. Specifically, when printing of the same layout data is carried out again, a printed matter having the same substantive contents can be obtained under the same conditions as that of the original printed matter, without resetting rasterize processing conditions and output processing conditions. In other words, backup data of print job data may be kept in the state of a paper medium so as to reuse this backup data as needed. For example, in the case of printing by a digital printer with no printing plate, whose printing steps are relatively simple, keeping its printed matter may be substituted for storing printing plate in the case of printing with plate, whose printing steps are relatively complicated.

### <Third Preferred Embodiment>

On the second preferred embodiment, generating the PDL-converted symbol data DSP2 and subsequent combining it with the first layout data DL1 results in generation of the second layout data DL2 and then generation of the of the second print job data DJ2, thereby implementing the addition of the symbol SB to a printed matter. The addition of the symbol SB to the printed matter should not be limited to this way.

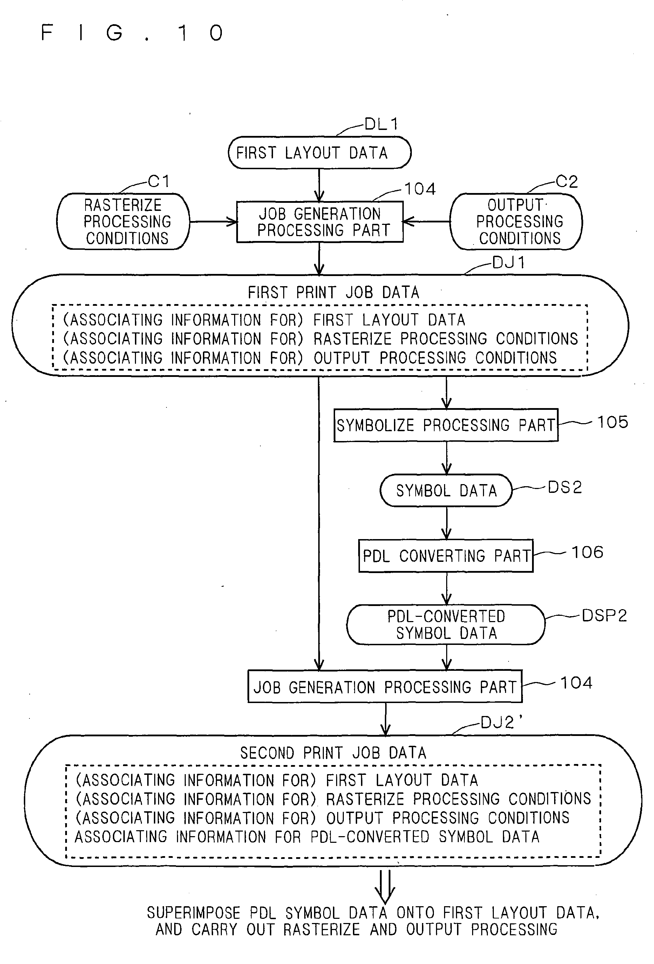

Fig. 10 shows one example thereof as a third preferred embodiment. The processing in the third preferred embodiment can be implemented by the print system 110 in the second preferred embodiment, and the description of the respective parts is therefore omitted here. In the case of Fig. 10, PDL-converted symbol data DSP2 generated by the operation of the PDL converting part 106 is maintained solely, without being combined with the first layout data DL1, and only its associated information is added to the print job data DJ1, thereby generating second print job data DJ2'. The second print job data DJ2' contains a description such that rasterize processing is performed in a state in which the PDL-converted symbol data DSP2 is superimposed onto the first layout data DL1. If instructed the printing of the print job data DJ2', the rasterize processing part 108 performs rasterize processing after superposing the first print job data DJ1 and the PDL-converted symbol data DSP2 according to the description of the print job data DJ2', thereby generating raster data. The output device 120 performs output processing by using the obtained raster data. Also in this alternative, the same printed matter as in the second preferred embodiment can be obtained finally. This alternative eliminates the need for the data combining part 107.

In the case of generating a multi-page document, if imposition processing is carried out prior to rasterize processing, PDL-converted symbol data may be added when generating imposition data.

### <Modifications>

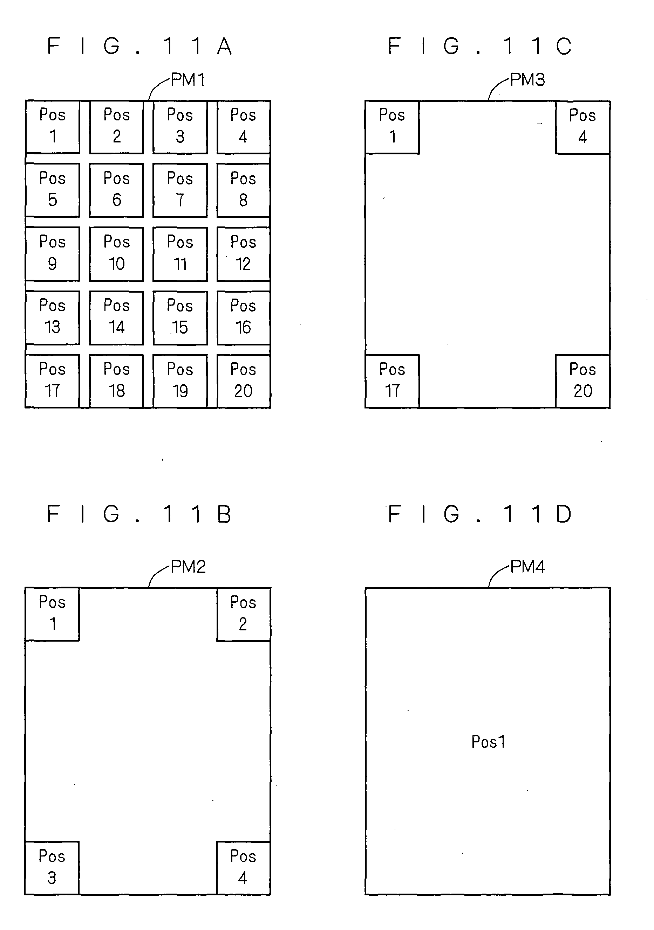

Although in the foregoing preferred embodiments the symbols are laid such that unit symbols may be lined at a lower part of the printed matter, the arrangement of symbols on a printed matter, namely, the combining form of symbol data should not be limited to the above. For a multi-page document, if there is layout space, any symbol may be located on any page. Figs. 11A, 11B, 11C and 11D illustrate other examples of layout. In Figs. 11A to 11D, Pos1 to Pos20 indicate the order of unit symbols laid out. Preferably, this order coincides with the order of encoding and decoding.

Fig. 11A illustrates a case where unit symbols are located over the entire surface of a printed matter PM1. This corresponds to such a case where a symbol is located on a blank paper in the middle or the last in a series of pages, or a symbol is located on the rear side of a series of pages of single-sided printing. Fig. 11B illustrates a case where unit symbols are located at four corners on a page of a printed matter PM2. Fig. 11C also illustrates a case where unit symbols are located at four corners on a page of a printed matter PM3, in which the unit symbols are located across a plurality of pages. Fig. 11D illustrates a case where a symbol having a size equivalent of a page size is spread over the entire surface of a page of a printed matter PM4.

Alternatively, the contents except for symbols may be printed in a normal way, while only the symbols may be printed with special transparent ink, with which the symbols cannot be recognized under visible radiation. For example, if a symbol is overprinted at an arbitrary position on a page at the time of PDL conversion or data combining, there is no possibility of preventing the visibility of the substantive image on a printed matter. It is therefore avoidable that the symbol location is limited by the original representation contents and the layout situations. In other words, the symbol layout as shown in Fig. 11A and Fig. 11D can be implemented on a printing surface of a printed matter, thereby increasing the degree of freedom of symbol layout. In this case, it is generally impossible for a person merely viewing the printed matter to find the fact that the symbol is printed for data restoring. This suppresses the production of a printed matter, the contents of which are altered by restoring that is not desired by the creator of the printed matter. It is however necessary to make possible for the read means of a restore processor to read the symbol printed with the transparent ink.

Any symbol need not lie within the completed printed matter. For example, it may be formed at such a region that is cut away at the cutting step after printing. In this case, its restore processing requires that the printed matter before cutting away be kept. Unless the printed matter in such a state is kept, it is impossible to perform restore processing. This suppresses the production of a printed matter, the contents of which are altered by restoring that is not desired by the creator of the printed matter.

In the first preferred embodiment, for a printed matter whose data capacity is increased by encoding, such as a printed matter containing an image, it becomes necessary to generate an extremely large number of unit symbol data depending on the technique of symbolization. This is improper. In such a case, image data portions representing a multivalued image in PDL layout data may not be encoded, and the rest, namely, only the description of layout information on a text and an image may be encoded for symbolization. In this case, the PDL layout data can be restored nearly faithfully in the following manner. Specifically, in the restore processing, the read means 31 reads not only symbols but also the above image data portions to obtain electronic data, and they are combined together at the time of decoding. This suppresses the data capacity of data that become a target for symbolization, thereby permitting efficient processing. This also suppresses the number of unit symbols to be formed on a printed matter. Alternatively, a symbol and the region except for the symbol may be read by different read means.

Alternatively, the same symbol may be laid at a plurality of locations, or one print data may be symbolized in parallel with different symbolization techniques and then laid. This increases reliability of restore processing.

Data that becomes a target for encoding is suitably compressed or encrypted by a known technique.

Generation and layout of symbols need not be carried out every time layout data is generated, and the execution/non-execution of the generation and layout may be selectable. In this case, it is possible, for example, not to carry out symbol layout when generating print data for first proof, but do only when revising.

In the first preferred embodiment, the conversion of layout data to PDL by the PDL converting part 5, and the symbol generation by the symbolize processing part 7 may be carried out in parallel at the same time. Specifically, the symbolize processing may be initiated as the PDL converting part 5 interprets in sequence the description of layout data DL and generates PDL-converted layout data DLP accordingly. If it is already determined to previously symbolize, the processing time reduction is attainable.

Although the foregoing description has been made of the case of symbolizing the PDL layout data with the QR code, other types of symbols such as veri code and maxi code may be used.

Although the foregoing description has been made of the case of optically reading and encoding a symbol, the symbol may be read magnetically.

While the invention has been shown and described in detail, the foregoing description is in all aspects illustrative and not restrictive. It is therefore understood that numerous modifications and variations can be devised without departing from the scope of the invention.

## Claims

1. A print data processor comprising:
a symbolizing element that generates first symbol data by performing symbolize processing for encoding predetermined symbolization target data;
a converting element that converts data having a specific description format to data having a description format in a predetermined page description language, said first symbol data being converted to second symbol data by said converting element; and
a print data generating element that generates print data containing data based on said predetermined symbolization target data and said second symbol data, wherein
said predetermined symbolization target data is data containing at least data described in said predetermined page description language, and
said symbolize processing is processing for encoding said first symbol data in a technique permitting reversible decoding by predetermined restore means.

2. The print data processor according to claim 1, which is a print data generating device to generate print data that can be subjected to output processing by a predetermined printer, further comprising:
a layout processing element that generates first layout data, wherein
said first layout data is converted to second layout data in said converting element;
said symbolizing element symbolizes said second layout data as said predetermined symbolization target data; and
said print data generating element is a combining element, said combining element generating said print data by combining said second symbol data with said second layout data.

3. The print data processor according to claim 2, wherein
said symbolizing element symbolizes said second layout data except for part representing a multivalent image.

4. The print data processor according to claim 1, which is a print job processor that generates print job data supplied to a printed matter generation processing through predetermined processing means, further comprising:
a print job generating element that generates print job data in which print target data described in said predetermined page description language is associated with print processing conditions for said print target data, wherein
said first print job data is generated, with first layout data described in said predetermined page description language employed as said print target data;
said symbolizing element symbolizes said first print job data as said predetermined symbolization target data; and
said print job generating element is also said print data generating element, and generates second print job data as said print data, said second print job data containing said first layout data and said second symbol data as said print target data.

5. The print data processor according to claim 4, further comprising:
a combining element that generates second layout data by combining said second symbol data with said first layout data; and
said second print job data is generated, with said second layout data employed as said print target data.

6. The print data processor according to claim 1, wherein
said symbolizing element generates, from said predetermined symbolization target data, a plurality of unit symbol data as said first symbol data.

7. The print data processor according to claim 1, wherein
said print data generating element generates said print data such that an image based on said second symbol data may be formed at a region to be cut away during a printed matter generation based on said print data.

8. The print data processor according to claim 1, wherein
said print data generating element generates said print data such that an image based on said second symbol data may be printed with ink being transparent to visible radiation when printing based on said print data is carried out by a predetermined printer.

9. A print system comprising:
(a) a print data processor, comprising:
(a-1) a symbolizing element that generates first symbol data by performing symbolizing processing for encoding predetermined symbolization target data;
(a-2) a converting element that converts data having a specific description format to data having a description format in a predetermined page description language, said first symbol data being converted to second symbol data by the converting element;
(a-3) a print data generating element that generates print data containing data based on said predetermined symbolization target data and the second symbol data, and
(b) a restore processor that restores data encoded to a predetermined symbol printed on a printed matter, said restore processor comprising:
(b-1) a read element that captures image data by reading at least a partial image on a printed matter; and
(b-2) a restore processing element that restores encoded data by decoding image data of said predetermined symbol obtained with reading said predetermined symbol by said read element, wherein
said predetermined symbolization target data is data containing at least data described in said predetermined page description language, and
said symbolize processing is processing for encoding said first symbol data in a technique permitting reversible decoding by at least the predetermined restore processor.

10. The print system according to claim 9, the print data processor being a print data generating device to generate print data that can be subjected to output processing by a predetermined printer, and said print data processor further comprising:
(a-4) a layout processing element that generates first layout data,
said first layout data being converted to second layout data in said converting element, wherein
said symbolizing element symbolizes said second layout data as said predetermined symbolization target data, and
said print data generating element is a combining element, said combining element generating said print data by combining said second symbol data with said second layout data.

11. The print system according to claim 10, wherein
said symbolizing element symbolizes said second layout data except for part representing a multivalent image.

12. The print system according to claim 11, the read element comprising:
(b-1-1) a symbol read element that generates first read image data by reading said predetermined symbol; and
(b-1-2) an image read element that captures second read image data by reading at least a partial image on a printed matter, wherein
said restore processing element restores data that has become a target for encoding in said print data processor, by combining data obtained through decoding of said first read image data, with a portion of said second read image data corresponding to a multivalent image contained in said printed matter.

13. The print system according to claim 9, said print data processor being a print job processor that generates print job data supplied to a printed matter generation processing by predetermined processing means, and said print data processor further comprising:
(a-4) a print job generating element that generates print job data in which print target data described in said predetermined page description language is associated with print processing conditions for said print target data, wherein
first print job data is generated, with first layout data described in said predetermined page description language employed as said print target data, wherein
said symbolizing element symbolizes said first print job data as said predetermined symbolization target data, and
said print job generating element is also said print data generating element, and generates second print job data as said print data, said second print job data containing said first layout data and said second symbol data employed as said print target data.

14. The print system according to claim 13, further comprising:
(c) rasterize processing means that generates raster data by rasterizing said print target data under said print processing conditions; and
(d) output processing means that performs output processing of said raster data under said print processing conditions.

15. The print system according to claim 14, wherein said print data processor comprises:
(a-5) a rasterize processing element that operates as said rasterize processing means.

16. A backup method of print data capable of being subjected to output processing by a predetermined printer, comprising the steps of:
(a) generating first layout data;
(b) converting said first layout data to second layout data having a description format in a page description language that can be processed by a predetermined printer;
(c) generating first symbol data by symbolizing said second layout data through encoding in a technique permitting reversible decoding by predetermined restore means;
(d) converting said first symbol data to second symbol data having a description format in said page description language;
(e) generating print data by combining said second layout data with said second symbol data; and
(f) outputting a printed matter based on said print data by said predetermined printer.

17. A backup method of print job data supplied to a printed matter generation processing by predetermined processing means, comprising the steps of:
(a) generating first print job data in which print target data is associated with print processing conditions for said print target data, said print target data being first layout data described in a predetermined page language;
(b) generating first symbol data by symbolizing said first print job data through encoding in a technique permitting reversible decoding by predetermined restore means;
(c) converting said first symbol data to second symbol data having a description format in said predetermined page description language;
(d) generating second print job data containing, as said print target data, the first layout data and said second symbol data obtained based on said first print job data;
(e) rasterize processing that rasterizes said second print job data by rasterize processing means under said print processing conditions; and
(f) outputting, by predetermined output means, raster data obtained in the step (e) under the print processing conditions.

18. A program stored in and executed by a computer for making said function as a print data processor, the print data processor comprising:
a symbolizing element that generates first symbol data by performing symbolize processing for encoding predetermined symbolization target data;
a converting element that converts data having a specific description format to data having a description format in a predetermined page description language, said first symbol data being converted to second symbol data by said converting element; and
a print data generating element that generates print data containing data based on said predetermined symbolization target data and said second symbol data, wherein
said predetermined symbolization target data is data containing at least data described in said predetermined page description language, and
said symbolize processing is processing for encoding said first symbol data in a technique permitting reversible decoding by predetermined restore means.
